# EUROPEAN PATENT SPECIFICATION

(11) **EP 3 534 039 B1**
(45) Date of publication and mention of the grant of the patent: **11.08.2021**
(21) Application number: 16920792.5
(22) Date of filing: 04.11.2016
(51) Int. Cl.: F16H 37/12, B21J 15/38, B21J 15/26

(54) **RIVETING TRANSMISSION DEVICE AND ELECTRIC RIVETING GUN**
NIETÜBERTRAGUNGSVORRICHTUNG UND ELEKTRISCHE NIETPISTOLE
DISPOSITIF DE TRANSMISSION DE RIVETAGE ET PISTOLET DE RIVETAGE ÉLECTRIQUE

(43) Date of publication of application: 04.09.2019
(73) Proprietor: Hong, Jingsong, Fuyang, Anhui 236000 (CN)
(72) Inventor: Hong, Jingsong, Fuyang, Anhui 236000 (CN)
(74) Representative: AWA Sweden AB
(86) International application number: PCT/CN2016/104687
(87) International publication number: WO 2018/082036

(56) References cited:
- CN-A- 103 831 454
- CN-A- 104 930 147
- CN-U- 204 565 044
- CN-U- 205 393 439
- CN-U- 206 234 334
- CN-Y- 201 271 720
- US-A- 5 473 805

## Description

### Technical field

The present invention relates to the technical field of riveting transmission, in particular to a riveting transmission device and an electric rivet gun with the riveting transmission device.

### Background

An electric rivet gun is a special tool used for installing a rivet, and is one of the main tools in the riveting field. A riveting transmission device is an important transmission device in the electric rivet gun (the characteristics of all riveting transmission devices are that each riveting transmission device is subjected to a unidirectional force, i.e., the riveting transmission device is under a tension while riveting, and under no-load when reset). The riveting transmission device is used for bearing a load of rivet breaking and completing a pull riveting in a riveting tool.

At present, the riveting transmission device includes a front bearing seat, a rear bearing seat, and a ball screw rod assembly respectively disposed in the front bearing seat and rear bearing seat. The assembly between the ball screw rod assembly and the front and rear bearing seats has the following problems. First, the assembly relationship is complicated, for example, a screw sleeve gear of the ball screw rod assembly is provided between the front bearing seat and rear bearing seat, resulting in a complicated connection between the front bearing seat and rear bearing seat, and at the same time, making the volume of the whole riveting transmission device relatively large, so that the riveting transmission device cannot be used in a narrow space. Second, a high assembly accuracy is required, for example, between the front and rear bearing seats, a perpendicularity of the ball screw rod assembly should be ensured. Moreover, a concentricity of various components of the ball screw rod assembly should also be ensured.

CN204565044U discloses an electronic riveting gun comprising a riveting system, a screw drive system, a planetary reduction box and a motor. The use of planetary deceleration combined with ordinary gear reduction leads to a simple and reliable assembly of the gun.

### Summary

In summary, the objective of the present invention is to provide a riveting transmission device, aiming to solve the problem that the existing riveting transmission device has a large volume due to a complicated assembly relationship between various components of the riveting transmission device.

The present invention is realized as follows. A riveting transmission device includes a bearing rear seat, a bearing front seat and a ball screw rod assembly. The bearing front seat includes a vertical portion, a first horizontal portion and a second horizontal portion parallel to the first horizontal portion, and the first horizontal portion and the second horizontal portions are connected perpendicularly to the vertical portion. The bearing rear seat is disposed in the second horizontal portion and abuts against the vertical portion. The ball screw rod assembly includes a screw rod assembly passing through the first horizontal portion, a support member sleeved outside the screw rod assembly and cooperating with the screw rod assembly, a screw sleeve gear used for connecting a speed reduction mechanism and driving the support member to rotate around an axis, a first bearing sleeved on the first horizontal portion and abutting against the vertical portion, and a second bearing disposed between the support member and the bearing rear seat. One end of the support member abuts against the first bearing, and the screw sleeve gear is sleeved on the other end of the support member, and is located outside the bearing rear seat. The bearing rear seat is provided with a first limiting structure for preventing the support member disengaging from the bearing rear seat, and the support member is provided with a second limiting structure for preventing the support member disengaging from the bearing rear seat. Two ends of the second bearing respectively abut against the first limiting structure and the second limiting structure.

Specifically, the first limiting structure is a step-like hole provided on the bearing rear seat, and the second limiting structure is an annular groove formed by the support member recessing in a radial direction. The second bearing is disposed in the annular groove, and abuts against a hole wall of the step-like hole.

Alternatively, the first limiting structure is an annular protrusion formed by a sidewall of the bearing rear seat protruding in a radial direction, and the second limiting structure includes a mounting groove formed by the support member recessing in the radial direction, and a circlip disposed in the mounting groove. One end of the second bearing abuts against the annular protrusion, the other end of the second bearing abuts against the circlip.

Alternatively, the first limiting structure is an annular flange formed by the sidewall of the bearing rear seat protruding in the radial direction, and the second limiting structure is an annular boss formed by the sidewall of the support member protruding in the radial direction. One end of the second bearing abuts against the annular flange, and the other end of the second bearing abuts against the annular boss.

Alternatively, the first limiting structure includes an embedded groove formed by a sidewall of the bearing rear seat recessing in a radial direction and a retaining ring disposed in the embedded groove, and the second limiting structure is an annular convex block formed by the sidewall of the support member protruding in the radial direction. One end of the second bearing abuts against the retaining ring, and the other end of the second bearing abuts against the annular convex block.

Further, a third bearing is included. The third bearing is disposed between the bearing rear seat and the support member, and is adjacent to the second bearing.

Further, the support member is connected to the screw rod assembly by a ball. The support member is provided with a plurality of sinking slots, and at least one ball is disposed in each of the sinking slots. The screw rod assembly is provided with a spiral guide rail for limiting a rolling path of the at least one ball.

Preferably, the screw rod assembly includes a screw rod cooperating with the support member and a positioning block for restricting a rotation of the screw rod around the axis, and the positioning block is disposed on the screw rod.

Further, the support member includes a protection frame sleeved outside the screw rod and a screw sleeve disposed outside the protection frame, and the protection frame is provided with the plurality of sinking slots.

Compared with the prior art, for the riveting transmission device provided by the embodiment of the present invention, the speed reduction mechanism drives the screw sleeve gear of the ball screw rod assembly to rotate around the axis, the screw sleeve gear drives the support member to rotate around the axis, the support member cooperates with the screw rod assembly for transmission, i.e., a circular motion of the screw sleeve gear in a vertical direction is converted into a linear motion of the screw rod assembly in a horizontal direction. When the screw sleeve gear rotates in a positive direction along the axis, the support member drives the screw rod assembly to move forward in the horizontal direction, at this time, an end of the support member in a same direction as a forward direction of the screw rod assembly abuts against the first bearing provided with the first horizontal portion, thereby restricting the support member from moving forward together with the screw rod assembly, and at the same time, avoiding the support member from directly abutting against the first horizontal portion, so as to limit a circular motion of the support member in the vertical direction. When the screw sleeve gear rotates in an opposite direction around the axis, the support member drives the screw rod assembly to move backward in the horizontal direction, at this time, the second limiting structure on the support member abuts against one end of the second bearing, and the other end of the second bearing abuts against the first limiting structure on the bearing rear seat, thereby restricting the support member from moving backward together with the screw rod assembly, and at the same time, the support member may rotate relative to the bearing rear seat along the axis under a guiding action of the second bearing. Specifically, the bearing front seat, the bearing rear seat and the ball screw rod assembly are sequentially sleeved, and the overall assembly structure is simple. Moreover, the screw sleeve gear is arranged outside the bearing rear seat, so that an overall length of the riveting transmission device is shortened, the structure is compact, and the occupied space is small.

An electric rivet gun is further provided in the present invention. The electric rivet gun includes a reduction gearbox assembly, a motor assembly for driving the reduction gearbox assembly, and the riveting transmission device as described above. The screw sleeve gear of the riveting transmission device is engaged and connected to the reduction gearbox assembly.

Compared with the prior art, the electric rivet gun provided by the invention can make the overall volume of the electric rivet gun smaller on the basis of the above-mentioned riveting transmission device, and can adapt to a narrow space environment.

### Brief Description of the Drawings

Fig. 1 is a cross-sectional view showing a riveting transmission device according to embodiment 1 of the present invention;
Fig. 2 is a cross-sectional view of a bearing rear seat according to embodiment 1 of the present invention;
Fig. 3 is a cross-sectional view of a support member according to embodiment 1 of the present invention;
Fig. 4 is a cross-sectional view showing a riveting transmission device according to embodiment 2 of the present invention;
Fig. 5 is a cross-sectional view showing a riveting transmission device according to embodiment 3 of the present invention;
Fig. 6 is a cross-sectional view showing a riveting transmission device according to embodiment 4of the present invention; and
Fig. 7 is a partial cross-sectional view of an electric rivet gun according to an embodiment of the present invention.

### Detailed Description of the Embodiments

In order to make the objective, technical solutions and advantages of the present invention more definite and clearer, the present invention will be further described below in detail with reference to the drawings and embodiments. It is understood that the specific embodiments described herein are merely illustrations of the present invention and are not intended to limit the invention.

It should be noted that when a component is described to be "fixed" or "disposed" on other component, it may be directly or indirectly on other component. When a component is described to be "connected" to other component, it may be directly or indirectly connected to other component.

It should be further noted that the left, right, upper, lower, top, bottom and other orientation terms in embodiments are only relative concepts or reference to the normal use state of the product, and should not be considered as being restrictive.

The implementation of the present invention will be described in detail below with reference to the specific embodiments.

### Embodiment 1

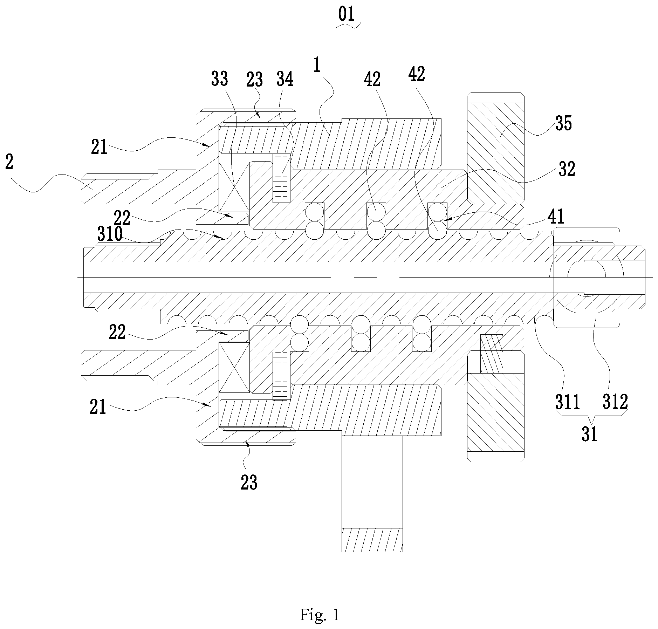

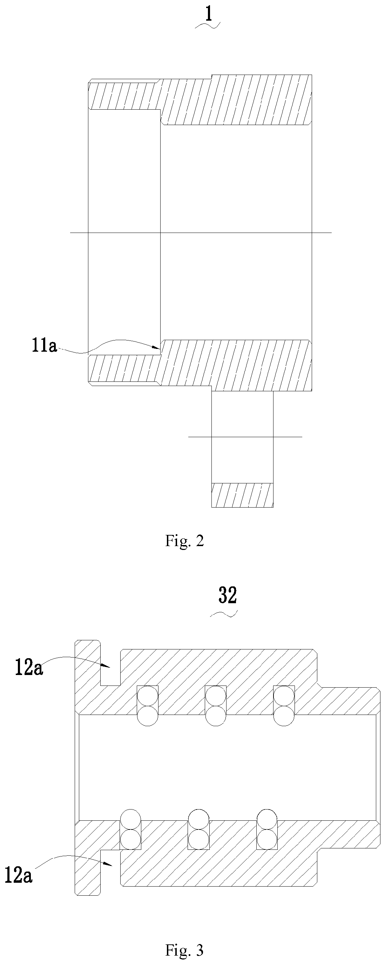

Referring to Figs. 1-3, an embodiment of the present invention provides a riveting transmission device. The riveting transmission device includes the bearing rear seat 1, the bearing front seat 2 and the ball screw rod assembly 3. The bearing front seat 2 includes the vertical portion 21, the first horizontal portion 22 and the second horizontal portion 23, the first horizontal portion 22 and the second horizontal portions 23 are parallel to each other, and are vertically connected to the vertical portion 21. The bearing rear seat 1 is disposed in the second horizontal portion 23 and abuts against the vertical portion 21. The ball screw rod assembly 3 includes the screw rod assembly 31, the support member 32 cooperating with the screw rod assembly 32, the screw sleeve gear 35, the first bearing 33 sleeved on the first horizontal portion 22 and abutting against the vertical portion 21, and the second bearing 34 disposed between the support member 32 and the bearing rear seat 1. The screw rod assembly 31 is disposed passing through the first horizontal portion 22. One end of the support member 32 abuts against the first bearing 33, and the screw sleeve gear 35 is sleeved on the other end of the support member 32, and is located outside the bearing rear seat 1. The bearing rear seat 1 is provided with the first limiting structure 11 for preventing the support member 32 from disengaging from the bearing rear seat 1, and the support member 32 is provided with the second limiting structure 12 for preventing the support member 32 from disengaging from the bearing rear seat 1. Two ends of the second bearing 34 respectively abut against the first limiting structure 11 and the second limiting structure 12.

The working principle of the riveting transmission device 01 provided by the embodiment of the present invention is as follows. The speed reduction mechanism drives the screw sleeve gear 35 of the ball screw rod assembly 3 to rotate around the axis, the screw sleeve gear 35 drives the support member 32 to rotate around the axis, the support member 32 cooperates with the screw rod assembly 31 for the transmission, i.e., a circular motion of the screw sleeve gear 35 in a vertical direction is converted into a linear motion of the screw rod assembly 31 in a horizontal direction. When the screw sleeve gear 35 rotates in a positive direction along the axis, the support member 32 drives the screw rod assembly 31 to move forward in the horizontal direction, at this time, an end of the support member 32 in a same direction as a forward direction of the screw rod assembly 31 abuts against the first bearing provided with the first horizontal portion 22, thereby restricting the support member 32 from moving forward together with the screw rod assembly 31, and at the same time, avoiding the support member 32 from directly abutting against the first horizontal portion 22, so as to limit a circumferential movement of the support member 32 in the vertical direction. When the screw sleeve gear 35 rotates in an opposite direction around the axis, the support member 32 drives the screw rod assembly 31 to move backward in the horizontal direction, at this time, the second limiting structure 12 on the support member 32 abuts against one end of the second bearing 34, and the other end of the second bearing 34 abuts against the first limiting structure 12 on the bearing rear seat 1, thereby restricting the support member 32 from moving backward together with the screw rod assembly 31, and at the same time, the support member 32 may rotate relative to the bearing rear seat 1 along the axis under a guiding action of the second bearing 34. Specifically, the bearing front seat 2, the bearing rear seat 1 and the ball screw rod assembly 3 are sequentially sleeved, and the overall assembly structure is simple. Moreover, the screw sleeve gear 35 is arranged outside the bearing rear seat 1, so that the overall length of the riveting transmission device 01 is short, the structure is compact, and the occupied space is small.

Specifically, referring to Figs. 1-3, in the present embodiment, the first limiting structure 11 is the step-like hole 11a provided on the bearing rear seat 1, i.e., the step-like hole 11a provided on an inner sidewall of the bearing rear seat 1 in an axial direction, and the second limiting structure 12 is the annular groove 12a formed by the support member 32 recessing in a radial direction. The second bearing 34 is disposed in the annular groove 12a, and abuts against a hole wall of the step-like hole 11 a. Thus, when the screw sleeve bearing rotates in a reverse direction, the support member 32 drives the screw rod assembly 31 to move backward in a horizontal direction, i.e., a direction consistent with the direction in which the support member 32 is disengaged from the bearing rear seat 1. In order to realize the conversion from the circular motion to the linear motion, it is necessary to limit the linear movement of the support member 32 in the horizontal direction, preventing the support member 32 from doing linear motion along with the screw rod assembly 31. Therefore, the second bearing 34 disposed in the annular groove 12a is snap-fitted in the hole wall of the step-like hole 11a, so as to restrict the linear movement of the support member 32 in the horizontal direction, i.e., avoiding the support member 32 from disengaging from the bearing rear seat 1.

Further, referring to Figs. 1-3, the support member 32 cooperates with the screw rod assembly 31 by the ball 42 to realize the transmission. A sidewall of the support member 32 toward the screw rod assembly 31 is provided with a plurality of sinking slots 41 arranged at an equal interval, and the screw rod assembly 31 is provided with the spiral guide rail 310 corresponding to each sinking slot 41. An equal number of balls 42 are provided in he each sinking slot 41, a part of the balls 42 are placed in the sinking slots 41, the other part of the balls are placed on the spiral guide rail 310, and the balls roll in holding spaces enclosed by the sinking slots and the spiral guide rail, thereby converting the circular motion into the linear motion. Specifically, referring to Fig. 1, the ball 42 is disposed in each of the sinking slots 41 to realize the conversion of the moving direction.

In particular, referring to Figs. 1-3, in the present embodiment, the screw rod assembly 31 includes the screw rod 311 cooperating with the support member 32 and the positioning block 312 disposed on the screw rod 311. The screw rod 311 has a hollow column shape, and the spiral guide rail 310 is disposed on an outer side of the screw rod. The function of the positioning block 312 is to limit the rotation of the screw rod 311 around the axis during the transmission.

### Embodiment 2

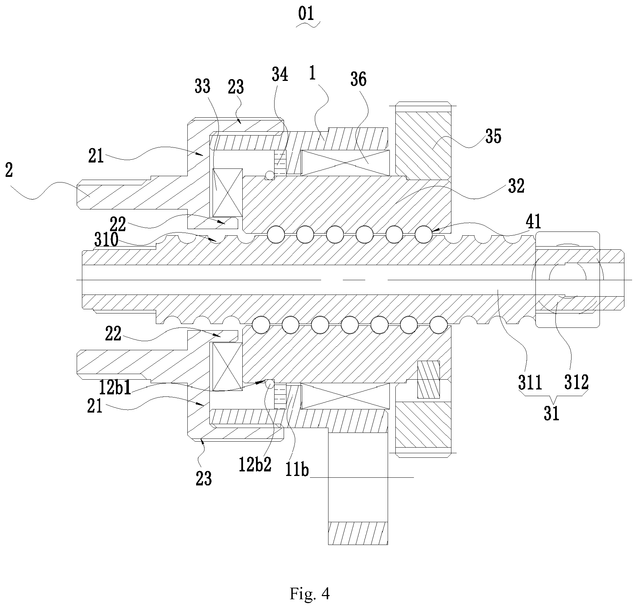

Referring to Fig. 4, the differences between the present embodiment and the above embodiment are that the first limiting structure 11 is the annular protrusion 11b formed by the sidewall of the bearing rear seat 1 protruding in the radial direction, and the second limiting structure 12 includes the mounting groove 12b1 formed by the support member 32 recessing in the radial direction and the circlip 12b2 disposed in the mounting groove 12b1. Specifically, one end of the second bearing 34 abuts against the annular protrusion 11b, and the other end of the second bearing 34 abuts against the circlip 12b2. Thus, the use of such two limiting structures similarly prevents the support member 32 disengaging from the bearing rear seat 1.

Further, referring to Fig. 4, the third bearing 36 is further disposed between the bearing rear seat 1 and the support member 32, and adjacent to the second bearing 34. The function of the third bearing 36 is same as that of the second bearing 34, both of which realize that the support member 32 may rotate around the axis relative to the bearing rear seat 1. By adding the third bearing 36, the support member 32 may rotate more stably around the axis with less friction resistance.

### Embodiment 3

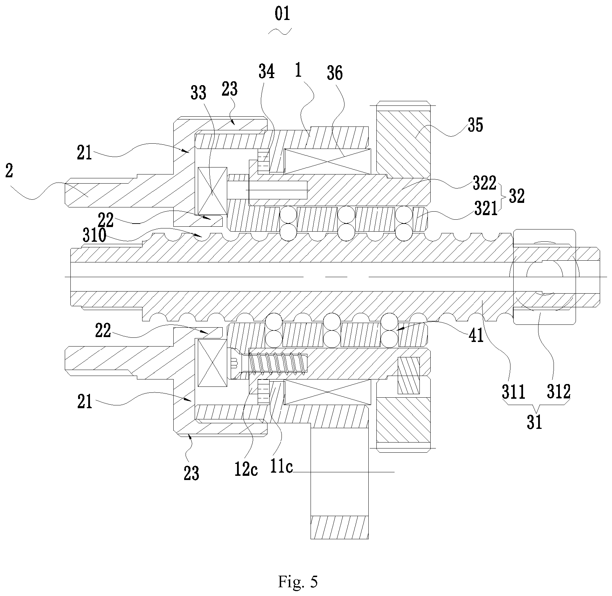

Referring to Fig. 5, the differences between the present embodiment and the above embodiments are that the first limiting structure 11 is the annular flange 11c formed by the sidewall of the bearing rear seat 1 protruding in the radial direction, and the second limiting structure 12 is the annular boss 12c formed by the sidewall of the support member 32 protruding in the radial direction. Similarly, one end of the second bearing 34 abuts against the annular flange 11c, and the other end of the second bearing 34 abuts against the annular boss 12c, so as to prevent the support member 32 from disengaging from the bearing rear seat 1.

Further, referring to Fig. 5, the support member 32 includes the protection frame 321 disposed outside the screw rod and the screw sleeve 322 disposed outside the protection frame 321. The screw sleeve 322 is connected to the protection frame 321 by a screw and a positioning pin, the protection frame 321 is provided with a plurality of sinking slots 41 arranged at an equal interval. Moreover, two balls 42 in a stacked arrangement are disposed in each sinking slot 41; a portion of each ball 42 at the lower side is accommodated in the spiral guide rail 310, and the other portion thereof is accommodated in the sinking slot 41, and the balls 42 at the upper side are completely in the sinking groove 41. In this way, a direct contact area between each ball 42 at the lower side and the sinking slot 41 is reduced in a transmission process, the friction resistance of the each ball 42 in the transmission process is reduced to the minimum, and the whole transmission process is more stable without being stuck.

### Embodiment 4

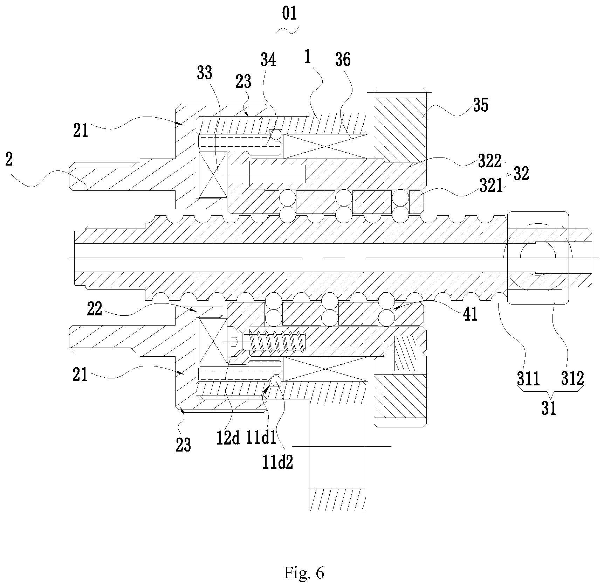

Referring to Fig. 6, the differences between the present embodiment and the above embodiments are that the first limiting structure 11 includes the embedded groove 11d1 formed by the sidewall of the bearing rear seat 1 recessing in the radial direction, and the retaining ring 11d2 disposed in the embedded groove 11d1, and the second limiting structure 12 is the annular convex block 12d formed by the sidewall of the support member 32 protruding in the radial direction. Similarly, one end of the second bearing 34 abuts against the retaining ring 11d2, and the other end of the second bearing 34 abuts against the annular convex block 12d, so as to prevent the support member 32 from disengaging from the bearing rear seat 1.

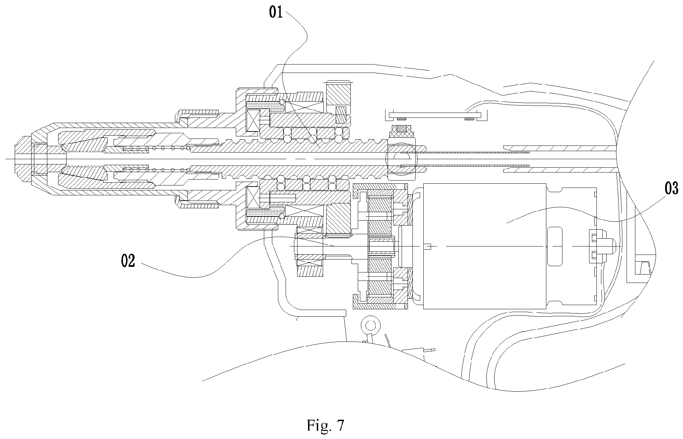

Referring to Fig. 7, the embodiment of the present invention further provides an electric rivet gun, including the reduction gearbox assembly 02, the motor assembly 03 for driving the reduction gearbox assembly, and the above-mentioned riveting transmission device 01. The screw sleeve gear 35 of the riveting transmission device 01 is engaged and connected to the reduction gearbox assembly 02.

The electric rivet gun provided by the embodiment of the present invention can make the overall volume of the electric rivet gun smaller on the basis of the

above-mentioned riveting transmission device 01, and can be used in a narrow space environment.

## Claims

1. A riveting transmission device (01), comprising a bearing rear seat (1), a bearing front seat (2) and a ball screw rod assembly (3); wherein the bearing front seat comprises a vertical portion (21), a first horizontal portion (22) and a second horizontal portion (23) parallel to the first horizontal portion, the first horizontal portion and the second horizontal portion are connected perpendicularly to the vertical portion; the ball screw rod assembly comprises a screw rod assembly (31) passing through the first horizontal portion, a support member (32) sleeved outside the screw rod assembly and cooperating with the screw rod assembly, a screw sleeve gear (35) for connecting a speed reduction mechanism and driving the support member to rotate around an axis, a first bearing (33) sleeved on the first horizontal portion and abutting against the vertical portion,
**characterized in that**
the bearing rear seat is disposed in the second horizontal portion and abuts against the vertical portion
and further comprising a second bearing (34) disposed between the support member and the bearing rear seat; one end of the support member abuts against the first bearing, and the screw sleeve gear is sleeved on the other end of the support member, and is located outside the bearing rear seat; the bearing rear seat is provided with a first limiting structure (11) for preventing the support member disengaging from the bearing rear seat, the support member is provided with a second limiting structure (12) for preventing the support member from disengaging from the bearing rear seat, and two ends of the second bearing respectively abut against the first limiting structure and the second limiting structure.

2. The riveting transmission device according to claim 1, wherein the first limiting structure is a step-like hole (11a) provided on the bearing rear seat, and the second limiting structure is an annular groove (12a) formed by the support member recessing in a radial direction; the second bearing is disposed in the annular groove, and abuts against a hole wall of the step-like hole.

3. The riveting transmission device according to claim 1, wherein the first limiting structure is an annular protrusion (11b) formed by a sidewall of the bearing rear seat protruding in a radial direction; the second limiting structure comprises a mounting groove (12b1) formed by the support member recessing in a radial direction, and a circlip (12b2) deposed in the mounting groove; an end of the second bearing abuts against the annular protrusion, the other end of the second bearing abuts against the circlip.

4. The riveting transmission device according to claim 1, wherein the first limiting structure is an annular flange (11c) formed by a sidewall of the bearing rear seat protruding in a radial direction, and the second limiting structure is an annular boss (12c) formed by a sidewall of the support member protruding in a radial direction; one end of the second bearing abuts against the annular flange, and the other end of the second bearing abuts against the annular boss.

5. The riveting transmission device according to claim 1, wherein the first limiting structure comprises an embedded groove (11d1) formed by a sidewall of the bearing rear seat recessing in a radial direction, and a retaining ring (11d2) disposed in the embedded groove; the second limiting structure is an annular convex block (12d) formed by a sidewall of the support member protruding in the radial direction; one end of the second bearing abuts against the retaining ring, and the other end of the second bearing abuts against the annular convex block.

6. The riveting transmission device according to claims 1-4, further comprising a third bearing (36), wherein the third bearing is disposed between the bearing rear seat and the support member, and adjacent to the second bearing.

7. The riveting transmission device according to claims 1-4, wherein the support member is connected to the screw rod assembly by a ball (42), the support member is provided with a plurality of sinking slots; at least one ball is disposed in each of the sinking slots (41), and the screw rod assembly is provided with a spiral guide rail (310) limiting a rolling path of the at least one ball.

8. The riveting transmission device according to claim 7, wherein the screw rod (311) assembly comprises a screw rod cooperating with the support member, and a positioning block (312) for restricting a rotation of the screw rod around the axis; and the positioning block is disposed on the screw rod.

9. The riveting transmission device according to claim 8, the support member comprises a protection frame (321) sleeved outside the screw rod, and a screw sleeve (322) disposed outside the protection frame; and the protection frame is provided with the plurality of sinking slots.

10. An electric rivet gun, comprising a reduction gearbox assembly (02), a motor assembly (03) for driving the reduction gearbox assembly, and the riveting transmission device according to any one of claims 1-9, wherein a screw sleeve gear (35) of the riveting transmission device is engaged and connected to the reduction gearbox assembly.

## Patentansprüche

1. Nietübertragungsvorrichtung (01), die einen hinteren Lagersitz (1), einen vorderen Lagersitz (2) und eine Kugelgewindestangenanordnung (3) umfasst; wobei der vordere Lagersitz einen vertikalen Abschnitt (21), einen ersten horizontalen Abschnitt (22) und einen zweiten horizontalen Abschnitt (23), der zu dem ersten horizontalen Abschnitt parallel ist, umfasst, der erste horizontale Abschnitt und der zweite horizontale Abschnitt senkrecht zu dem vertikalen Abschnitt verbunden sind; die Kugelgewindestangenanordnung eine Gewindestangenanordnung (31), die durch den ersten horizontalen Abschnitt hindurchgeht, ein Stützglied (32), das auf die Gewindestangenanordnung aufgeschoben ist und mit der Gewindestangenanordnung zusammenwirkt, ein Gewindemuffenzahnrad (35) zum Verbinden eines Drehzahlreduzierungsmechanismus und Antreiben des Stützglieds zur Drehung um eine Achse, ein erstes Lager (33), das auf den ersten horizontalen Abschnitt aufgeschoben ist und an dem vertikalen Abschnitt anliegt, umfasst,
**dadurch gekennzeichnet, dass**
der hintere Lagersitz in dem zweiten horizontalen Abschnitt angeordnet ist und an dem vertikalen Abschnitt anliegt,
und ferner umfassend ein zweites Lager (34), das zwischen dem Stützglied und dem hinteren Lagersitz angeordnet ist; ein Ende des Stützglieds an dem ersten Lager anliegt und das Gewindemuffenzahnrad auf das andere Ende des Stützglieds aufgeschoben ist und außerhalb des hinteren Lagersitzes positioniert ist; der hintere Lagersitz mit einer ersten Begrenzungsstruktur (11) zum Verhindern, dass das Stützglied mit dem hinteren Lagersitz außer Eingriff gelangt, versehen ist, das Stützglied mit einer zweiten Begrenzungsstruktur (12) zum Verhindern, dass das Stützglied mit dem hinteren Lagersitz außer Eingriff gelangt, versehen ist und zwei Enden des zweiten Lagers an der ersten Begrenzungsstruktur bzw. der zweiten Begrenzungsstruktur anliegen.

2. Nietübertragungsvorrichtung nach Anspruch 1, wobei die erste Begrenzungsstruktur ein an dem hinteren Lagersitz vorgesehenes stufenartiges Loch (11a) ist und die zweite Begrenzungsstruktur eine von dem Stützglied gebildete Ringnut (12a), die in einer radialen Richtung vertieft ist, ist; das zweite Lager in der Ringnut angeordnet ist und an einer Lochwand des stufenartigen Lochs anliegt.

3. Nietübertragungsvorrichtung nach Anspruch 1, wobei die erste Begrenzungsstruktur ein von einer Seitenwand des hinteren Lagersitzes gebildeter ringförmiger Vorsprung (11b), der in einer radialen Richtung vorragt, ist; die zweite Begrenzungsstruktur eine von dem Stützglied gebildete Befestigungsnut (12b1), die in einer radialen Richtung vertieft ist, und einen Sicherungsring (12b2), der in der Befestigungsnut angeordnet ist, umfasst; ein Ende des zweiten Lagers an dem ringförmigen Vorsprung anliegt, das andere Ende des zweiten Lagers an dem Sicherungsring anliegt.

4. Nietübertragungsvorrichtung nach Anspruch 1, wobei die erste Begrenzungsstruktur ein von einer Seitenwand des hinteren Lagersitzes gebildeter ringförmiger Flansch (11c), der in einer radialen Richtung vorragt, ist und die zweite Begrenzungsstruktur ein von einer Seitenwand des Stützglieds gebildeter ringförmiger Ansatz (12c), der in einer radialen Richtung vorragt, ist; ein Ende des zweiten Lagers an dem ringförmigen Flansch anliegt und das andere Ende des zweiten Lagers an dem ringförmigen Ansatz anliegt.

5. Nietübertragungsvorrichtung nach Anspruch 1, wobei die erste Begrenzungsstruktur eine von einer Seitenwand des hinteren Lagersitzes gebildete eingebettete Nut (11d1), die in einer radialen Richtung vertieft ist, und einen Haltering (11d2), der in der eingebetteten Nut angeordnet ist, umfasst; die zweite Begrenzungsstruktur ein von einer Seitenwand des Stützglieds gebildeter ringförmiger konvexer Block (12d), der in der radialen Richtung vorragt, ist; ein Ende des zweiten Lagers an dem Haltering anliegt und das andere Ende des zweiten Lagers an dem ringförmigen konvexen Block anliegt.

6. Nietübertragungsvorrichtung nach Anspruch 1-4, die ferner ein drittes Lager (36) umfasst, wobei das dritte Lager zwischen dem hinteren Lagersitz und dem Stützglied und neben dem zweiten Lager angeordnet ist.

7. Nietübertragungsvorrichtung nach Anspruch 1-4, wobei das Stützglied durch eine Kugel (42) mit der Gewindestangenanordnung verbunden ist, das Stützglied mit mehreren Senkschlitzen versehen ist; mindestens eine Kugel in jedem der Senkschlitze (41) angeordnet ist und die Gewindestangenanordnung mit einer Spiralführungsschiene (310) versehen ist, die einen Rollpfad der mindestens einen Kugel begrenzt.

8. Nietübertragungsvorrichtung nach Anspruch 7, wobei die Anordnung der Gewindestange (311) eine Gewindestange, die mit dem Stützglied zusammenwirkt, und einen Positionierungsblock (312) zum Beschränken einer Drehung der Gewindestange um die Achse umfasst; und der Positionierungsblock an der Gewindestange angeordnet ist.

9. Nietübertragungsvorrichtung nach Anspruch 8, wobei das Stützglied einen Schutzrahmen (321), der auf die Gewindestange aufgeschoben ist, und eine Gewindemuffe (322), die außerhalb des Schutzrahmens angeordnet ist, umfasst; und der Schutzrahmen mit mehreren Senkschlitzen versehen ist.

10. Elektrische Nietpistole, die eine Untersetzungsgetriebeanordnung (02), eine Motoranordnung (03) zum Antreiben der Untersetzungsgetriebeanordnung und die Nietübertragungsvorrichtung nach einem der Ansprüche 1-9 umfasst, wobei ein Gewindemuffenzahnrad (35) der Nietübertragungsvorrichtung mit der Untersetzungsgetriebeanordnung in Eingriff steht und verbunden ist.

## Revendications

1. Dispositif de transmission de rivetage (01), comprenant un socle de palier arrière (1), un socle de palier avant (2) et un ensemble de tige de vis à billes (3) ; le socle de palier avant comprenant une partie verticale (21), une première partie horizontale (22) et une seconde partie horizontale (23) parallèle à la première partie horizontale, la première partie horizontale et la seconde partie horizontale étant reliées perpendiculairement à la partie verticale ; l'ensemble de tige de vis à billes comprenant un ensemble de tige de vis (31) traversant la première partie horizontale, un élément de support (32) emmanché à l'extérieur de l'ensemble de tige de vis et coopérant avec l'ensemble de tige de vis, un engrenage à manchon fileté (35) pour connecter un mécanisme de réduction de vitesse et entraîner l'élément de support à tourner autour d'un axe, un premier palier (33) emmanché à la première partie horizontale et venant en butée contre la partie verticale,
**caractérisé en ce que**
le socle de palier arrière est disposé dans la seconde partie horizontale et vient en butée contre la partie verticale et comprend en outre un second palier (34) disposé entre l'élément de support et le socle de palier arrière ; une extrémité de l'élément de support vient en butée contre le premier palier, et l'engrenage à manchon fileté est emmanché à l'autre extrémité de l'élément de support, et est situé à l'extérieur du socle de palier arrière ; le socle de palier arrière est muni d'une première structure de limitation (11) pour empêcher l'élément de support de se désengager du socle de palier arrière, l'élément de support est muni d'une seconde structure de limitation (12) pour empêcher l'élément de support de se désengager du socle de palier arrière, et deux extrémités du second palier viennent respectivement en butée contre la première structure de limitation et la seconde structure de limitation.

2. Dispositif de transmission de rivetage selon la revendication 1, la première structure de limitation étant un trou en forme de marche (11a) prévu sur le socle de palier arrière, et la seconde structure de limitation étant une rainure annulaire (12a) formée par l'élément de support en retrait dans une direction radiale ; le second palier étant disposé dans la rainure annulaire, et venant en butée contre une paroi de trou du trou en forme de marche.

3. Dispositif de transmission de rivetage selon la revendication 1, la première structure de limitation étant une saillie annulaire (11b) formée par une paroi latérale du socle de palier arrière faisant saillie dans une direction radiale ; la seconde structure de limitation comprenant une rainure de montage (12b1) formée par l'élément de support en retrait dans une direction radiale, et un circlip (12b2) déposé dans la rainure de montage : une extrémité du second palier venant en butée contre la saillie annulaire, l'autre extrémité du second palier venant en butée contre le circlip.

4. Dispositif de transmission de rivetage selon la revendication 1, la première structure de limitation étant une bride annulaire (11c) formée par une paroi latérale du socle de palier arrière faisant saillie dans une direction radiale, et la seconde structure de limitation étant un bossage annulaire (12c) formé par une paroi latérale de l'élément de support faisant saillie dans une direction radiale ; une extrémité du second palier venant en butée contre la bride annulaire, et l'autre extrémité du second palier venant en butée contre le bossage annulaire.

5. Dispositif de transmission de rivetage selon la revendication 1, la première structure de limitation comprenant une rainure intégrée (11d1) formée par une paroi latérale du socle de palier arrière en retrait dans une direction radiale, et une bague de retenue (11d2) disposée dans la rainure intégrée ; la seconde structure de limitation étant un bloc convexe annulaire (12d) formé par une paroi latérale de l'élément de support faisant saillie dans la direction radiale ; une extrémité du second palier venant en butée contre la bague de retenue, et l'autre extrémité du second palier venant en butée contre le bloc convexe annulaire.

6. Dispositif de transmission de rivetage selon les revendications 1 à 4, comprenant en outre un troisième palier (36), le troisième palier étant disposé entre le socle de palier arrière et l'élément de support, et adjacent au deuxième palier.

7. Dispositif de transmission de rivetage selon les revendications 1 à 4, l'élément de support étant relié à l'ensemble de tige de vis par une bille (42), l'élément de support étant muni d'une pluralité de fentes d'enfoncement ; au moins une bille étant disposée dans chacune des fentes d'enfoncement (41), et l'ensemble de tige de vis étant muni d'un rail de guidage en spirale (310) limitant une trajectoire de roulement de l'au moins une bille.

8. Dispositif de transmission de rivetage selon la revendication 7, l'ensemble de tige de vis (311) comprenant une tige de vis coopérant avec l'élément de support, et un bloc de positionnement (312) pour restreindre une rotation de la tige de vis autour de l'axe ; et le bloc de positionnement étant disposé sur la tige de vis.

9. Dispositif de transmission de rivetage selon la revendication 8, l'élément de support comprenant un cadre de protection (321) emmanché à l'extérieur de la tige de vis, et un manchon de vis (322) disposé à l'extérieur du cadre de protection ; et le cadre de protection étant muni de la pluralité de fentes d'enfoncement.

10. Pistolet à rivets électrique, comprenant un ensemble de boîte de réduction (02), un ensemble moteur (03) pour entraîner l'ensemble de boîte de réduction, et le dispositif de transmission de rivetage selon l'une quelconque des revendications 1 à 9, un engrenage à manchon fileté (35) du dispositif de transmission de rivetage étant engagé et connecté à l'ensemble de boîte de réduction.
